# EUROPÄISCHE PATENTSCHRIFT

(11) **EP 3 145 376 B1**
(45) Veröffentlichungstag und Bekanntmachung des Hinweises auf die Patenterteilung: **11.07.2018**
(21) Anmeldenummer: 15723175.4
(22) Anmeldetag: 05.05.2015
(51) Int. Cl.: A47J 43/07, G10L 15/22, G10L 15/28, G05B 19/042

(54) **ELEKTRISCH BETRIEBENE KÜCHENMASCHINE MIT SPRACHERKENNUNGSEINRICHTUNG**
ELECTRICALLY OPERATED FOOD PROCESSOR WITH SPEECH RECOGNITION UNIT
ROBOT DE CUISINE ELECTRIQUE AVEC UNITÉ DE RECONNAISSANCE DE LA PAROLE

(30) Priorität: 21.05.2014 DE 102014107163
(43) Veröffentlichungstag der Anmeldung: 29.03.2017
(73) Patentinhaber: Vorwerk & Co. Interholding GmbH, 42275 Wuppertal (DE)
(72) Erfinder: KOETZ, Hendrik, 58300 Wetter (DE)
(74) Vertreter: Müller, Enno
(86) Internationale Anmeldenummer: PCT/EP2015/059768
(87) Internationale Veröffentlichungsnummer: WO 2015/176950

(56) Entgegenhaltungen:
- EP-A1- 1 561 409
- EP-A2- 1 215 658
- WO-A1-2014/083029
- WO-A1-2015/088141
- DE-A1-102010 060 650
- JP-A- 2005 241 767
- US-A1- 2009 287 644
- US-A1- 2013 304 479
- US-A1- 2014 028 826
- "Method and Apparatus for AutomtedCookingSystem for visually impaired", IP.COM JOURNAL, IP.COM INC., WEST HENRIETTA, NY, US, 30. August 2012 (2012-08-30), XP013153392, ISSN: 1533-0001
- HEINZMANN J ET AL: "3-D facial pose and gaze point estimation using a robust real-time tracking paradigm", AUTOMATIC FACE AND GESTURE RECOGNITION, 1998. PROCEEDINGS. THIRD IEEE INTERNATIONAL CONFERENCE ON NARA, JAPAN 14-16 APRIL 1998, LOS ALAMITOS, CA, USA,IEEE COMPUT. SOC, US, 14. April 1998 (1998-04-14), Seiten 142-147, XP010277652, DOI: 10.1109/AFGR.1998.670939 ISBN: 978-0-8186-8344-2

## Beschreibung

Die Erfindung betrifft ein elektrisch betriebenes Haushaltsgerät, insbesondere eine Küchenmaschine, mit einer Spracherkennungseinrichtung, welche ausgebildet ist, Sprachsignale eines Nutzers mit bekannten Steuerbefehlen zum Betrieb des Haushaltsgerätes zu vergleichen, und mit einer Aktivierungseinrichtung zur Aktivierung der Spracherkennungseinrichtung.

Haushaltsgeräte, insbesondere auch Küchenmaschinen, der vorgenannten Art sind im Stand der Technik bekannt.

Die Druckschrift DE 102010060650 A1 offenbart beispielsweise ein Haushaltsgerät, nämlich eine Küchenmaschine, der Steuerbefehle in Bezug auf die Durchführung und Abarbeitung von Rezepten über eine Datenschnittstelle übermittelt werden können. Dabei kann die Küchenmaschine in Datenverbindung mit beispielsweise einem Mobiltelefon stehen, welches Daten an die Küchenmaschine übermittelt. In diesem Zusammenhang ist es weiterhin vorgesehen, eine Sprachsteuerung des Mobiltelefons zur Erfassung von Steuerbefehlen des Nutzers zu verwenden.

Im Stand der Technik ist es darüber hinaus bekannt, Spracherkennungseinrichtungen von Mobiltelefonen durch Tastendruck zu aktivieren. Durch den Tastendruck startet eine Spracherkennungssoftware, mittels welcher die Sprachsignale des Nutzers erfasst werden können.

Nachteilig bei dem vorgenannten Stand der Technik ist, dass die Aktivierung der Spracherkennungseinrichtung ausschließlich über eine Tastenbetätigung erfolgt. Dies ist insbesondere in solchen Situationen nachteilig, in welchen der Nutzer beispielsweise schmutzige oder klebrige Hände - beispielsweise beim Kochen oder Backen - hat und somit die Vorteile der Spracherkennung erst nutzen kann, nachdem er eine Aktivierungstaste gedrückt hat. Dies wiederspricht jedoch dem eigentlichen Nutzen der Spracherkennung. Darüber hinaus ist es auch nachteilig, dass zur Nutzung der Spracherkennung neben dem Haushaltsgerät ein zweites Gerät für die Spracherkennung, nämlich ein Mobiltelefon, benötigt wird. Die Druckschrift "Method and Apparatus for AutomtedCookingSystem for visually impaired", IP.com IPCOM000221136D, 30-08-2012 offenbart ein automatisiertes Kochsystem mit einer Spracherkennungseinrichtung und Rezepte zur Steuerung des Kochsystems.

Die Patentanmeldung EP1215658A2 offenbart ein Verfahren zur optischen Aktivierung einer sprachgesteuerten Vorrichtung. Es ist daher Aufgabe der Erfindung, ein Haushaltsgerät mit einer komfortableren Aktivierung und Benutzung der Spracherkennungseinrichtung zu schaffen, insbesondere die vorgenannten Nachteile des Standes der Technik zu überwinden.

Zur Lösung der vorgenannten Aufgabe schlägt die Erfindung eine elektrisch betriebene Küchenmaschine gemäß Anspruch 1 und ein Verfahren zum Betrieb einer Küchenmaschine gemäß Anspruch 11 vor. Die Spracherkennungseinrichtung des erfindungsgemäßen Haushaltsgerätes (erfindungsgemäß, der Küchenmaschine) ist somit durch optisch erfasste Informationen aktivierbar. Eine Tastenbetätigung entfällt. Die Detektionseinrichtung ist ausgebildet und eingerichtet, Informationen im Bereich des Haushaltsgerätes zu erfassen. Sofern die erfassten Informationen ein valides optisches Signal enthalten, wird die Spracherkennung aktiviert. Die Spracherkennungseinrichtung des Haushaltsgerätes ist somit vollständig ohne Berührung des Haushaltsgerätes oder der Aktivierungseinrichtung aktivierbar.

Es wird weiterhin vorgeschlagen, dass die optische Detektionseinrichtung mindestens einen optischen Sensor zur Detektion optischer Signale aufweist, welcher so an dem Haushaltsgerät angeordnet ist, dass er im Wesentlichen in Richtung eines Nutzers ausgerichtet ist. Der oder die Sensoren können übliche Kamera-Chips sein, beispielsweise CCD-Chips oder CMOS-Chips. Vorteilhaft erfasst der Sensor einen Bereich vor dem Haushaltsgerät, in welchem sich ein Nutzer bei der Annäherung an das Haushaltsgerät üblicherweise aufhält.

Es wird vorgeschlagen, dass die optische Detektionseinrichtung eine Auswerteeinheit aufweist, welche eingerichtet ist, von dem optischen Sensor zeitlich aufeinanderfolgend detektierte Signale miteinander zu vergleichen. Dabei kann die optische Detektionseinrichtung die optischen Informationen beispielsweise in vorgegebenen Zeitabständen, beispielsweise jede Zehntel-Sekunde, erfassen und an die Auswerteeinheit weiterleiten. Die Auswerteeinheit vergleicht die zeitlich aufeinanderfolgenden Informationen und kann aufgrund von Veränderungen oder Differenzen der Bilddaten zum Beispiel eine Annäherung des Nutzers an das Haushaltsgerät erkennen.

Vorteilhaft weisen die optischen Signale eine Information über eine Ausrichtung des Körpers des Nutzers, insbesondere eine Kopfstellung oder Pupillenstellung des Nutzers, relativ zu dem Haushaltsgerät auf.

Durch diese Ausgestaltung ist gegebenenfalls neben einer üblichen Erfassung einer Anwesenheit eines Nutzers im Bereich des Haushaltsgerätes zusätzlich auch eine Richtungserkennung möglich, so dass erkannt werden kann, ob der Nutzer sich dem Haushaltsgerät zuwendet, insbesondere dieses anschaut. Schaut der Nutzer das Haushaltsgerät direkt an, kann von einem Kommunikationswunsch ausgegangen werden. Darüber hinaus kann davon ausgegangen werden, dass eine detektierte Person das Haushaltsgerät nutzen möchte.

Die Richtungserkennung erfolgt vorteilhaft mittels einer geeigneten Software, beispielsweise mittels eines Augenmodells zur Analyse der von der optischen Detektionseinrichtung erfassten Informationen.

Zufolge der vorgeschlagenen Richtungserkennung kann insbesondere eine Fehlauslösung eines hinterlegten Befehls allein bei Detektion einer Person, die nicht zwingend zugleich ein Nutzer des Haushaltsgerätes sein muss, im Erfassungsbereich der optischen Detektionseinrichtung ausgeschlossen werden.

Der Nutzer bzw. potentielle Nutzer des Haushaltsgerätes muss zur entsprechenden Erkennung nicht zwingend gezielt in Richtung der optischen Detektionseinrichtung, beispielsweise in eine Kamera, blicken. Vielmehr ist bevorzugt ein Berechnungsalgorithmus hinterlegt, der auch die Blickrichtung zumindest eines Auges der Person außerhalb des Erfassungsbereichs der optischen Detektionseinrichtung berücksichtigt, sofern, wie weiter bevorzugt, in dem hieraus resultierenden Blickfeld des Nutzers das Haushaltsgerät liegt.

Die Richtungserkennung kann bei entsprechendem positivem Ergebnis beispielsweise (zunächst) zu einer Begrüßung des Nutzers führen. Dies beispielsweise in optischer Form, weiter beispielsweise mittels eines Schriftzuges in einem Display, oder in akustischer Form bei bevorzugter Anordnung eines Schallwandlers in Form eines Lautsprechers. Eine solche Begrüßung kann durch Sprachausgabe erfolgen, darüber hinaus aber auch zusätzlich oder alternativ durch Akustiksignale beispielsweise in Form einer Tonfolge.

Mit der bevorzugt in dem Haushaltsgerät eingebauten, weiter bevorzugt in Richtung auf die übliche Position des Nutzers relativ zu dem Haushaltsgerät gerichteten optischen Detektionseinrichtung werden entweder kontinuierlich oder in diskreten Zeitabständen Informationen erfasst. Befindet sich eine Person in einem definierten Bildausschnitt und bevorzugt in einer definierten Entfernung vor dem Gerät (bevorzugt 0,4 bis 2 m, insbesondere etwa 1 m), wird das Bild untersucht, beispielsweise ein Abbild des Gesichtes und/oder zumindest eines Auges extrahiert und insbesondere die Blickrichtung ausgewertet. Die Aufnahme erfolgt bevorzugt mit einer üblichen VGA-Kamera, insbesondere aufweisend einen CCD-Sensor.

Die Richtungsauswertung des Auges in der erfassten Aufnahme ist erreicht mit einem bevorzugt in dem Haushaltsgerät integrierten Prozessor.

In einer weiteren Ausgestaltung kann vorgesehen sein, dass erst durch die Erfassung einer validen Richtung des Kopfes oder der Pupille eines im Erfassungsbereich des Haushaltsgerätes verweilenden Nutzers das Haushaltsgerät mit seinen Funktionen genutzt werden kann. So ist beispielsweise mit Erkennen einer validen Blickrichtung des Auges, darüber hinaus gegebenenfalls zusätzlich zu einer Erkennung eines Gesichts eines berechtigten Nutzers, auch die manuelle Bedienung des Haushaltsgerätes, d.h. die Bedienung über einzelne Stellelemente, wie beispielsweise Drehzahl-, Temperatur- und Zeitdauer-Steller möglich.

Des Weiteren wird vorgeschlagen, dass die Richtungserkennung mit Anschalten des Haushaltsgerätes aktivierbar ist. Mit Aktivieren des Haushaltsgerätes, beispielsweise zufolge Betätigung eines Hauptschalters oder Einstecken eines Netzstecker in die Netzsteckdose der hausseitigen Stromversorgung, befindet sich das Haushaltsgerät bevorzugt in einem sogenannten Stand-By-Modus, in welchem die Richtungserkennung zugleich aktiviert ist.

Alternativ wird die Richtungserkennung, insbesondere aus einem Stand-By-Modus des Haushaltsgerätes heraus, erst nach einer Befehlseingabe aktiviert. Diese Befehlseingabe ist in einer bevorzugten Ausgestaltung durch die Betätigung eines Stellelements des Haushaltsgerätes, beispielsweise eines Tasters oder Schalters, erreichbar.

Des Weiteren kann die Richtungserkennung nur durch Ausschalten des Haushaltsgerätes deaktivierbar sein, beispielsweise zufolge Betätigung des Hauptschalters in eine Aus-Stellung oder Trennen der netzseitigen Stromversorgung.

Die optische Detektionseinrichtung kann vorteilhaft einen 3D-Sensor aufweisen. Der 3D-Sensor ist bevorzugt zur Aufnahme von räumlichen Bildern ausgebildet. Es handelt sich bevorzugt um eine 3D-Kamera. Alternativ können auch zwei zueinander distanzierte optische Sensoren vorgesehen sein, wobei der Abstand der Sensoren üblicherweise dem Abstand menschlicher Augen zueinander entspricht. Durch eine solche stereoskopische Aufzeichnung und Auswertung der optischen Informationen ist beispielsweise die Ausrichtung des Körpers, des Kopfes oder der Pupille eines Nutzers ermittelbar.

Die hier vor- und nachstehend beschriebene Software zur Auswertung der Aufnahme beziehungsweise Aufnahmen ist nicht notwendig in dem Haushaltsgerät vorgesehen. Diese kann auch in einem außerhalb des Haushaltsgerätes angeordneten Computer oder Handgerät, wie etwa Mobiltelefon, vorgesehen sein, dies weiter bevorzugt unter Nutzung beispielsweise einer Funkverbindung. Die Auswertung kann darüber hinaus auch in einem räumlich entfernten Computer ("Cloud") durchgeführt werden.

Des Weiteren sind auch Akustiksignale des Nutzers auswertbar. Das Haushaltsgerät weist hierzu bevorzugt einen Schallwandler, insbesondere in Form eines Mikrofons auf. Der Schallwandler kann eine Aufzeichnung von Schall, somit auch gesprochener Befehle oder Anweisungen ermöglichen, beispielsweise in Form von digitalen Daten.

Das Akustiksignal ist bevorzugt ein Lautsignal des Nutzers, weiter bevorzugt das gesprochene Wort des Nutzers, etwa in Form eines Sprachbefehls. Ein Sprachbefehl kann typisiert sein, also beispielsweise ein oder mehrere für eine Funktion oder Auswahl vorgegebene Schlüsselwörter umfassen.

In einer typischen Umgebung des Haushaltsgerätes, die unter anderem geprägt ist von Akustiksignalen von Radio- oder TV-Sendungen oder durch menschliche Unterhaltung, kann es allein bei einer Akustiksignal-Auswertung zu Fehlinterpretationen kommen. Um dies zu verhindern, sind die Akustiksignale bevorzugt in Abhängigkeit von der erfassten Richtungserkennung auswertbar.

Durch die vorgeschlagene Ausgestaltung ist eine ständige Überwachung von Akustiksignalen durch das Haushaltsgerät nicht nötig. Durch die Verknüpfung mit der Richtungserkennung werden insbesondere typische Sprachbefehle, wie beispielsweise "schneller", "langsamer", "40°", "stop" oder "aus" separiert und bevorzugt nur bei einer erfassten validen Richtung des Körpers, des Kopfes oder einer Pupille eines Nutzers als tatsächliche Steuerbefehle für das Haushaltsgerät verwendet.

Beispielsweise zufolge der Erfassung einer den Vorgaben entsprechenden Blickrichtung des Auges des Nutzers erfolgt eine situative Aktivierung der Akustiksteuerung, insbesondere der Sprachsteuerung.

Das Haushaltsgerät verfügt bevorzugt über eine Spracherkennungssoftware. In Abhängigkeit von einer Spracherkennung ist eine Arbeitsroutine des Haushaltsgerätes durchführbar.

Mittels einer Sprachsteuerung ist es möglich, dass insbesondere die Stellgrößen, Drehzahl, Dauer und gegebenenfalls Temperatur, insbesondere Kochfunktionen, beispielsweise komplexe Garvorgänge oder die Auswahl eines Rezepts, durch akustisches Signal, insbesondere Sprache, gewählt werden können. Es ist hierbei nicht erforderlich, in einer bevorzugten Ausgestaltung aber gleichwohl möglich, das Haushaltsgerät, zumindest im betriebsbereiten Zustand, dabei zu berühren und entsprechende Tasten oder Schalter zu suchen.

Auch sind erfindungsgemäß mittels der Akustiksignal- beziehungsweise Spracherkennung vollständige Rezepte aus einer bevorzugt internen Rezept-Datenbank des Haushaltsgerätes, beispielsweise einer Küchenmaschine, insbesondere per Sprache anwählbar, sofern ein geeignetes, d.h. beispielsweise dem Sprachbefehl zuordenbares Rezept oder ein Teilbereich eines Rezeptes in einer Rezeptdatenbank hinterlegt ist.

Mit einem Schallwandler in Form eines elektronischen Mikrofons, welches bevorzugt in einem Gehäuse des Haushaltsgerätes, weiter bevorzugt in dem bei üblichen Arbeiten mit dem Haushaltsgerät dem Nutzer zugewandten Bereich des Gehäuses, angeordnet ist, wird das gesprochene Wort oder ein anderes akustisches Signal des Nutzers in elektrische Signale umgewandelt. Diese Signale werden bevorzugt von einem digitalen Signalprozessor (DSP) verarbeitet und analysiert. Nach der kontinuierlichen Analyse der empfangenen akustischen Signale und dem Vergleich mit einer vorher definierten Signalliste, die weiter bevorzugt in einer gespeicherten Datenbank vorliegt, liefert der digitale Signalprozessor die einer höchsten Wahrscheinlichkeit entsprechende Auswertung zurück. Es wird eine Überprüfung dahingehend angestellt, mit welchem hinterlegten Signal das empfangene akustische Signal die höchste Übereinstimmung aufweist.

Bevorzugt analysiert ein Mikrokontroller in einem weiteren Schritt das beispielsweise in Textform vorliegende Wort oder das akustische Signal und übersetzt dieses in einen Maschinenbefehl oder unmittelbar in ein Rezept, hinter dem eine Sequenz von Maschinenbefehlen hinterlegt ist. Abschließend wird der oder werden die Maschinenbefehle an die Steuerung des Haushaltsgerätes weitergeleitet und von diesem ausgeführt.

Schließlich wird mit der Erfindung - neben dem zuvor dargestellten Haushaltsgerät - auch ein Verfahren zum Betrieb eines Haushaltsgerätes, insbesondere einer Küchenmaschine, vorgeschlagen, wobei Sprachsignale eines Nutzers mittels einer Spracherkennungseinrichtung detektiert und mit bekannten Steuerbefehlen zum Betrieb des Haushaltsgerätes verglichen werden, wobei die Spracherkennungseinrichtung in Abhängigkeit von einem Aktivierungsereignis aktiviert wird, und wobei die Spracherkennungseinrichtung in Abhängigkeit von mittels einer Detektionseinrichtung detektierten optischen Signalen im Umgebungsbereich des Haushaltsgerätes aktiviert wird. Dabei gelten die gleichen Merkmale, die zuvor bereits in Bezug auf das Haushaltsgerät erläutert wurden, analog auch für das erfindungsgemäße Verfahren.

Vorteilhaft kann das vorgeschlagene Verfahren folgende Verfahrensschritte aufweisen:
Detektion zumindest eines optischen Signals,
Vergleichen des detektierten Signals mit vordefinierten Referenzsignalen, und Aktivierung der Spracherkennungseinrichtung, falls ein detektiertes Signal einem vordefinierten Referenzsignal entspricht.

In Bezug auf den Vergleich des detektierten Signals mit vordefinierten Referenzsignalen wird zusätzlich vorgeschlagen, dass anstatt nur eines Signals mehrere Signale in zeitlichen Abständen oder auch kontinuierlich mittels der optischen Detektionseinrichtung detektiert werden. Diese optischen Signale können dann entweder jeweils mit Referenzsignalen verglichen werden, oder alternativ auch miteinander selbst. Im letztgenannten Fall, dienen die zeitlich früher detektierten Signale selbst als Referenzsignale für ein zeitlich danach detektiertes Signal.

Besonders bevorzugt ist eine Verfahrensausgestaltung, bei welcher eine Ausrichtung des Körpers eines Nutzers, insbesondere eine Kopfstellung oder Pupillenausrichtung eines Nutzers, relativ zu dem Haushaltsgerät detektiert wird. Die für die Richtungserkennung verwendete Auswerteeinheit vergleicht dabei die detektierten Signale, welche Bilder des Körpers, insbesondere des Kopfes oder der Pupille, eines Nutzers sind, mit Referenzsignalen und aktiviert die Spracherkennungseinrichtung, sofern ein detektiertes Signal einem Referenzsignal entspricht, welches eine Zuwendung des Nutzers zu dem Haushaltsgerät anzeigt.

Nachstehend ist die Erfindung anhand der beigefügten Zeichnung erläutert. Die Zeichnung zeigt lediglich ein mögliches Ausführungsbeispiel der Erfindung. Es zeigt:

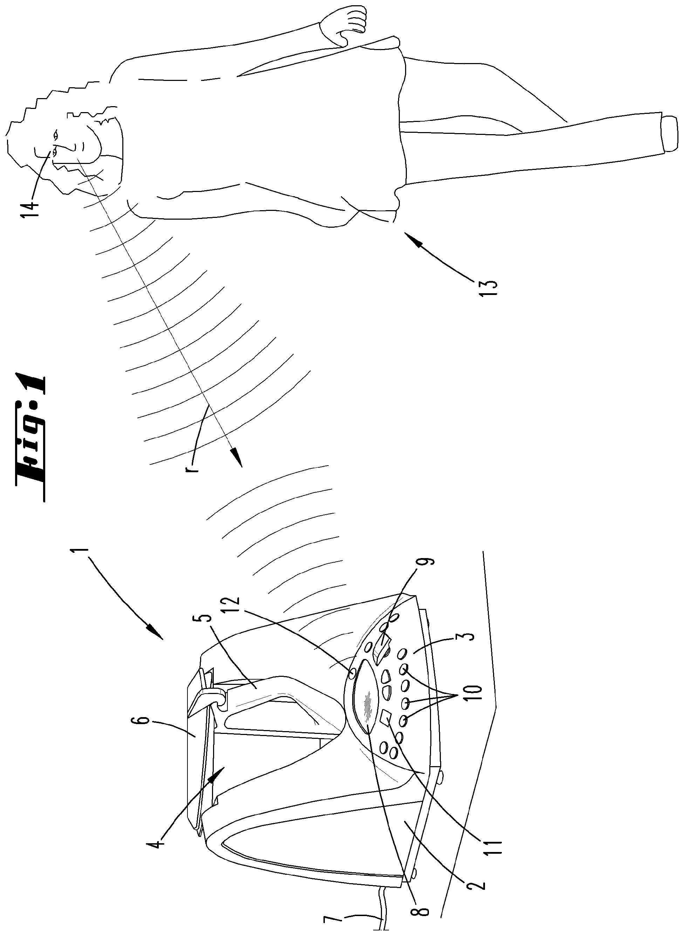

- Fig. 1:: in perspektivischer Darstellung ein Haushaltsgerät in Betriebsstellung mit einem dem Haushaltsgerät zugewandten Nutzer.

Dargestellt und beschrieben ist ein Haushaltsgerät 1, konkret eine Küchenmaschine mit einer Rührgefäß-Aufnahme 2 und einem Bedienfeld 3.

Bezüglich des Haushaltsgerätes 1 handelt es sich bevorzugt um ein Haushaltsgerät wie in den Druckschriften DE 10210442 A1 und/oder DE 102010060650 A1 beschrieben. Die Merkmale dieser vorbekannten Haushaltsgeräte werden hiermit vollinhaltlich in die Offenbarung der Erfindung mit einbezogen, auch zu dem Zweck, Merkmale dieser Haushaltsgeräte in Ansprüche vorliegender Erfindung mit einzubeziehen.

Dem Haushaltsgerät 1 gemäß Figur 1 ist ein Rührgefäß 4 zuordenbar, indem dieses in die Rührgefäß-Aufnahme 2 insbesondere im Fußbereich des Rührgefäßes 4 bevorzugt formschlüssig eingesetzt wird.

In dem Rührgefäß 4 ist dem Rührgefäßboden zugeordnet ein nicht dargestelltes Rührwerk vorgesehen, welches über einen in dem Haushaltsgerät 1 unterhalb der Rührgefäß-Aufnahme 2 angeordneten Elektromotor betrieben wird. Das Rührwerk verbleibt in dem Rührgefäß 4 auch bei Entnahme desselben aus der Rührgefäß-Aufnahme 2, wozu weiter bevorzugt das Rührwerk in der Zuordnungsstellung über eine drehfeste Steckkupplung mit dem Elektromotor verbunden ist.

Der Boden des Rührgefäßes 4 ist bevorzugt beheizbar zur Erhitzung eines in dem Rührgefäß 4 befindlichen Garguts. Bevorzugt kommt hier eine elektrische Widerstandsheizung zum Einsatz, welche in dem Boden des Rührgefäßes 4 integriert ist.

Das Rührgefäß 4 ist bevorzugt topfartig mit im Wesentlichen kreisrundem Querschnitt ausgebildet, mit einem sich zur Topföffnung, d.h. nach oben hin, konisch erweiternden Querschnitt. Die Topfwandung besteht bevorzugt aus einem Metallwerkstoff.

Weiter weist das Rührgefäß 4 einen bevorzugt senkrecht ausgerichteten Haltegriff 5 auf, welcher beispielsweise sockelseitig sowie topfrandseitig an dem Rührgefäß 4 festgelegt ist.

Das Rührgefäß 4 wird dem Haushaltsgerät 1 bevorzugt derart zugeordnet, dass der Haltegriff 5 sich freistehend zwischen den Gerätegehäuse-Backen, dem Bedienfeld 3 zugewandt, erstreckt, wobei der Sockelbereich des Rührgefäßes 4 sich auf einem integralen Boden des Haushaltsgerätes 1 im Bereich der Aufnahme 2 abstützt, dies unter Kupplung von Rührwerksantrieb und Rührwerk sowie bevorzugt elektrischer Kontaktierung der rührgefäßbodenseitigen Heizung.

Auf das Rührgefäß 4 ist ein Gefäßdeckel 6 aufsetzbar, welcher im Betrieb des Haushaltsgerätes 1, weiter insbesondere bei Betrieb des Rührwerks und/oder der bodenseitigen Widerstandsheizung, in einer aufgesetzten Stellung verriegelt ist, weiter bevorzugt an dem Gehäuse des Haushaltsgerätes 1.

Die Elektroversorgung des Elektromotors sowie der weiter bevorzugt rührgefäßbodenseitig vorgesehenen Heizung und darüber hinaus auch der elektrischen Steuerung des gesamten Haushaltsgerätes 1 ist über ein Netzanschlusskabel 7 erreicht.

In dem Bedienfeld 3 ist zunächst bevorzugt ein Display 8 vorgesehen. Weiter bevorzugt trägt das Bedienfeld 3 einen oder mehrere mechanische Schalter 9, Regler oder Tasten 10 zum Einstellen unterschiedlicher Stellgrößen, wie beispielsweise die Drehzahl des Rührwerks, die Temperatur der Heizung oder eine Zeitwahl, für den Betrieb der Haushaltsgerät 1.

Die über den Schalter 9 oder die Tasten 8 einzustellenden Stellgrößen beziehungsweise aufzurufenden Funktionen sind bevorzugt in dem Display 8 anzeigbar.

In dem Haushaltsgerät 1 ist weiter erfindungsgemäß eine Rezeptdatenbank hinterlegt. Diese beinhaltet, bevorzugt kategorisiert, eine Mehrzahl von Rezepten zur Zubereitung in dem Haushaltsgerät 1. Jedem Rezept zugeordnet sind bevorzugt die Parameter beziehungsweise Stellgrößen bezüglich Drehzahl des Rührwerks, Temperatur der Widerstandsheizung und Zeitdauer. Erfindungsgemäß werden diese Stellgrößen mit Aktivierung des Rezeptablaufes selbsttätig durch das Haushaltsgerät 1 eingestellt oder dem Benutzer zur Bestätigung vorgegeben.

Das Haushaltsgerät 1 ist, bevorzugt auch ergänzend und parallel zu einer Bedienung über ein Akustiksignal, in üblicher Weise manuell bedienbar, so insbesondere zufolge Betätigung von Schalter 9 und Tasten 10.

Bevorzugt wird das Haushaltsgerät 1 zur Bedienung zunächst freigeschaltet, weiter bevorzugt allein durch eine oder mehrere berechtigte Personen.

Der Berechtigungsnachweis zur Freischaltung des Haushaltsgerätes 1 und zur Aktivierung der Betriebsfunktionen des Haushaltsgerätes 1 ist bevorzugt durch eine Sprachsteuerung in Verbindung mit einer Richtungserkennung, beispielsweise einer Blickrichtungserkennung, erreicht. Zu diesem Zweck weist das Haushaltsgerät 1 eine Spracherkennungseinrichtung (nicht in der Figur dargestellt) auf, welche ausgebildet ist, Sprachsignale eines Nutzers 13 mit bekannten Steuerbefehlen zum Betrieb des Haushaltsgerätes 1 zu vergleichen. Zur Aktivierung der Spracherkennungseinrichtung weist das Haushaltsgerät 1 eine Aktivierungseinrichtung mit einer optischen Detektionseinrichtung auf. Die optische Detektionseinrichtung weist mindestens einen optischen Sensor 12 auf. In Abhängigkeit von mittels des optischen Sensors 12 erfassten Informationen wird die Spracherkennungseinrichtung aktiviert.

Das Haushaltsgerät 1 weist weiter bevorzugt eine Spracherkennungssoftware auf. Weiter ist insbesondere im Bereich des Bedienfeldes 3 in Zusammenwirkung mit der Spracherkennungssoftware ein Schallwandler 11 in Form eines Mikrofons angeordnet. Das Mikrofon sowie auch der optische Sensor 12, hier beispielsweise in Form einer elektronischen Kamera, ist in dem Bedienfeld 3 potenziell in Richtung auf den Nutzer 13 des Haushaltsgerätes 1 gerichtet. Der optische Sensor 12, hier beispielsweise in Form einer Kamera, dient insbesondere zur Aufnahme von auswertbaren Bildern im Zusammenhang mit einer Blickrichtungserkennung.

Bei der Spracherkennung wird bevorzugt das gesprochene Wort, insbesondere das Befehlswort beziehungsweise der daraus resultierende Schalldruck in elektrische Signale umgewandelt und von einem digitalen Signalprozessor verarbeitet und analysiert. Nach der kontinuierlichen Analyse der empfangenen Worte und dem Vergleich mit einer vorher definierten Wortliste innerhalb einer Befehlsdatenbank liefert der Signalprozessor das Wort mit der höchsten Wahrscheinlichkeit zurück, welches mit dem gesprochenen Wort übereinstimmt. Ein Mikrokontroller analysiert in einem weiteren Schritt das in Textform vorliegende Wort und übersetzt dieses in einen Maschinenbefehl oder in ein Rezept beziehungsweise setzt dies derart um, dass gezielt ein Rezept aus der Rezeptdatenbank abgerufen und zumindest auf dem Display 8 angezeigt wird.

In einer bevorzugten Weiterbildung führt die Übermittlung des Maschinenbefehls an die Rezeptdatenbank dazu, dass die zu dem aufgerufenen Rezept oder Rezeptabschnitt zugehörigen Parameter, wie Drehzahl, Temperatur und Zeit automatisch voreingestellt werden.

Um Fehlinterpretationen der Spracherkennung, insbesondere durch Umgebungseinflüsse, wie beispielsweise Radio, TV oder menschliche Unterhaltung, zu vermeiden, ist die Sprachsignalsteuerung des Haushaltsgerätes 1 gekoppelt mit einer Blickrichtungserkennung. Hierzu wird die Kamera 12 und eine vorgesehene Auswerte- beziehungsweise Analysesoftware genutzt.

Befindet sich ein Nutzer 13 in einem definierten Bildausschnitt und in einer definierten Entfernung, wird das aufgenommene Bild untersucht und beispielsweise ein Abbild zumindest eines Auges 14 des Nutzers 13 extrahiert. Alternativ kann auch die Ausrichtung des gesamten Körpers des Nutzers detektiert und für die Auswertung verwendet werden, oder auch nur Teile des Körpers wie z.B. der Kopf oder das Auge, hier insbesondere die Pupille.

Wird zufolge entsprechender Analyse softwareseitig festgestellt, dass die Blickrichtung r des Nutzers 13 in Richtung auf das Haushaltsgerät 1 weist, wird von einem Kommunikationswunsch des Nutzers 13 ausgegangen, was die Auslösung des dem Sprachbefehl zugeordneten Maschinenbefehls hervorruft.

Sprachbefehle, auch dem System bekannte Sprachbefehle, die ohne Blickkontakt zu dem Haushaltsgerät 1 erfasst werden, führen bevorzugt nicht zu einer Auslösung eines entsprechenden Maschinenbefehls.

Auch kann unter Nutzung der in dem Bedienfeld 3 vorgesehenen Kamera 12 zusätzlich zur Blickrichtungserkennung kontinuierlich ein Bild zur Gesichtserkennung aufgenommen werden.

Die Erkennung zur bevorzugt berührungslosen Steuerung des Haushaltsgerätes 1 - welche bevorzugt neben der üblichen manuellen Steuerung des Haushaltsgerätes 1 möglich ist - erfordert in einer bevorzugten Ausgestaltung zunächst das Anschalten des Haushaltsgerätes 1, insbesondere die Aktivierung desselben, beispielsweise über einen Hauptschalter. Alternativ ist die Freischaltung des Haushaltsgerätes durch einen bestimmten Sprachbefehl, bevorzugt in Zusammenwirkung mit der Blickrichtungserkennung erreichbar. So ist das Haushaltsgerät 1 bevorzugt nur insgesamt aktivierbar durch Erfassen eines vorgegebenen Signalwortes bei bevorzugt zugleich erfasster korrekter Blickrichtung r des Auges 14 des Nutzers 13.

### Bezugszeichenliste:

| | | | |
|---|---|---|---|
| 1 | Haushaltsgerät | r | Blickrichtung |
| 2 | Rührgefäß-Aufnahme | | |
| 3 | Bedienfeld | | |
| 4 | Rührgefäß | | |
| 5 | Haltegriff | | |
| 6 | Gefäßdeckel | | |
| 7 | Netzanschlusskabel | | |
| 8 | Display | | |
| 9 | Schalter | | |
| 10 | Taste | | |
| 11 | Schallwandler | | |
| 12 | Sensor | | |
| 13 | Nutzer | | |
| 14 | Auge | | |

## Patentansprüche

1. Elektrisch betriebene Küchenmaschine,
- mit einer Spracherkennungseinrichtung, welche ausgebildet ist, Sprachsignale eines Nutzers (13) mit bekannten Steuerbefehlen zum Betrieb der Küchenmaschine (1) zu vergleichen,
- mit einer Aktivierungseinrichtung zur Aktivierung der Spracherkennungseinrichtung, wobei die Aktivierungseinrichtung eine optische Detektionseinrichtung aufweist und eingerichtet ist, die Spracherkennungseinrichtung in Abhängigkeit von mittels der optischen Detektionseinrichtung erfassten Informationen zu aktivieren, **dadurch gekennzeichnet,**
- **dass** in der Küchenmaschine eine Rezeptdatenbank hinterlegt ist, wobei die Küchenmaschine weiter so eingerichtet ist,
- **dass** mittels der Spracherkennung vollständige Rezepte aus der internen Rezeptdatenbank anwählbar sind, sofern ein geeignetes, d.h. einem Sprachbefehl zuordenbares Rezept oder ein Teilbereich eines Rezeptes in der Datenbank hinterlegt ist,
- **dass** einem Rezept Parameter bezüglich Drehzahl des Rührwerks, Temperatur der Widerstandsheizung und Zeitdauer zugeordnet sind und
- **dass** mit Aktivierung des Rezeptablaufs die Parameter selbsttätig durch die Küchenmaschine eingestellt werden oder dem Benutzer zur Bestätigung vorgegeben werden.

2. Küchenmaschine (1) nach Anspruch 1, **dadurch gekennzeichnet, dass** die optische Detektionseinrichtung mindestens einen optischen Sensor (12) zur Detektion optischer Signale aufweist, welcher so an der Küchenmaschine (1) angeordnet ist, dass er im Wesentlichen in Richtung eines Nutzers (13) ausgerichtet ist.

3. Küchenmaschine (1) nach Anspruch 1 oder 2, **dadurch gekennzeichnet, dass** die optische Detektionseinrichtung eine Auswerteeinheit aufweist, welche eingerichtet ist, von dem optischen Sensor (12) zeitlich aufeinanderfolgend detektierte Signale miteinander zu vergleichen.

4. Küchenmaschine (1) nach Anspruch 2 oder 3, **dadurch gekennzeichnet, dass** die Signale eine Information über eine Ausrichtung des Körpers des Nutzers (13), insbesondere eine Kopfstellung oder Pupillenstellung des Nutzers (13), relativ zu dem Haushaltsgerät (1) aufweisen.

5. Küchenmaschine (1) nach einem der vorhergehenden Ansprüche, **dadurch gekennzeichnet, dass** die optische Detektionseinrichtung einen 3D-Sensor (12) aufweist.

6. Elektrisch betriebene Küchenmaschine nach einem der vorhergehenden Ansprüche, **dadurch gekennzeichnet, dass** die Küchenmaschine eingerichtet ist, wenn sich eine Person in einem definierten Bildausschnitt befindet, ein Bild zu untersuchen und ein Abbild des Gesichtes zu extrahieren und die Blickrichtung auszuwerten.

7. Küchenmaschine nach Anspruch 6, **dadurch gekennzeichnet, dass** der Nutzer sich zusätzlich in einer Entfernung zwischen 0,4 und 2m zu dem Gerät befinden muss.

8. Küchenmaschine nach einem der Ansprüche 6 oder 7, **dadurch gekennzeichnet, dass** ein Berechnungsalgorithmus hinterlegt ist, der auch eine Blickrichtung zumindest eines Auges des Nutzers außerhalb des Erfassungsbereiches der optischen Detektionseinrichtung berücksichtigt, sofern die Küchenmaschine in dem hieraus resultierenden Blickfeld des Nutzers liegt.

9. Küchenmaschine nach einem der Ansprüche 6 bis 8, **dadurch gekennzeichnet, dass** zusätzlich zu der Blickrichtungserkennung kontinuierlich ein Bild zur Gesichtserkennung unter Nutzung der in einem Bedienfeld der Küchenmaschine vorgesehenen Kamera aufnehmbar ist.

10. Küchenmaschine nach Anspruch 9, **dadurch gekennzeichnet, dass** erst durch die Erfassung einer validen Richtung des Kopfes oder der Pupille eines im Erfassungsbereich der Küchenmaschine verweilenden berechtigten Nutzers die Küchenmaschine mit ihren Funktionen nutzbar ist, in welchem Falle mit Erkennen der validen Blickrichtung des Auges, zusätzlich zu einer Erkennung des Gesichtes eines berechtigten Nutzers, auch die manuelle Bedienung der Küchenmaschine, das heißt die Bedienung über einzelne Stellelemente, wie beispielsweise Drehzahl-, Temperatur-und Zeitdauer-Steller möglich ist.

11. Verfahren zum Betrieb einer Küchenmaschine, wobei Sprachsignale eines Nutzers (13) mittels einer Spracherkennungseinrichtung detektiert und mit bekannten Steuerbefehlen zum Betrieb der Küchenmaschine (1) verglichen werden, wobei die Spracherkennungseinrichtung in Abhängigkeit von einem Aktivierungsereignis aktiviert wird, und die Spracherkennungseinrichtung in Abhängigkeit von mittels einer Detektionseinrichtung detektierten optischen Signalen im Umgebungsbereich der Küchenmaschine (1) aktiviert wird, **dadurch gekennzeichnet, dass** in der Küchenmaschine eine Rezeptdatenbank hinterlegt ist, dass mittels der Spracherkennung vollständige Rezepte aus der internen Rezeptdatenbank angewählt werden, sofern ein geeignetes, d.h. einem Sprachbefehl zuordenbares Rezept oder ein Teilbereich eines Rezeptes in der Datenbank hinterlegt ist, dass einem Rezept Parameter bezüglich Drehzahl des Rührwerks, Temperatur der Widerstandsheizung und Zeitdauer zugeordnet sind und dass mit Aktivierung des Rezeptablaufs die Parameter selbsttätig durch die Küchenmaschine eingestellt werden oder dem Benutzer zur Bestätigung vorgegeben werden.

12. Verfahren nach Anspruch 11, **gekennzeichnet durch** die Verfahrensschritte:
- Detektion zumindest eines optischen Signals,
- Vergleichen des detektierten Signals mit vordefinierten Referenzsignalen,
- Aktivierung der Spracherkennungseinrichtung, falls ein detektiertes Signal einem vordefinierten Referenzsignal entspricht.

13. Verfahren nach Anspruch 11 oder 12, **dadurch gekennzeichnet, dass** zeitlich aufeinanderfolgende Signale detektiert werden.

14. Verfahren nach Anspruch 12 oder 13, **dadurch gekennzeichnet, dass** ein vordefiniertes Referenzsignal ein zeitlich früher detektiertes Signal ist.

15. Verfahren nach einem der Ansprüche 11 bis 14, **dadurch gekennzeichnet, dass** eine Ausrichtung des Körpers eines Nutzers (13), insbesondere eine Kopfstellung oder Pupillenausrichtung des Nutzers (13), relativ zu der Küchenmaschine (1) detektiert wird.

## Claims

1. An electrically operated food processor,
- with a voice recognition system designed to compare voice signals of a user (13) with known control commands for operating the food processor (1),
- with an activation device for activating the voice recognition system, wherein the activation device has an optical detection system and is set up to activate the voice recognition system as a function of information acquired by the optical detection system, **characterized in that**
- a recipe database is stored in the food processor, wherein the food processor is further set up in such a way that
- the voice recognition system can be used to select complete recipes from the internal recipe database, provided that a suitable recipe, i.e., one that can be allocated to a voice command, or a portion of a recipe is stored in the database,
- parameters relating to the agitator speed, resistance heater temperature and duration are allocated to a recipe, and that,
- upon activation of the recipe sequence, the parameters are automatically set by the food processor or presented to the user for confirmation.

2. The food processor (1) according to claim 1, **characterized in that** the optical detection system has at least one optical sensor (12) for detecting optical signals, which is arranged on the food processor (1) in such a way as to be essentially aligned toward a user (13) .

3. The food processor (1) according to claim 1 or 2, **characterized in that** the optical detection system has an evaluation unit, which is set up to compare signals detected by the optical sensor (12) in chronological sequence with each other.

4. The food processor (1) according to claim 2 or 3, **characterized in that** the signals contain information about an alignment of the body of the user (13), in particular a head position or pupil position of the user (13), relative to the food processor (1).

5. The food processor (1) according to one of the preceding claims, **characterized in that** the optical detection system has a 3D sensor (12).

6. An electrically operated food processor according to one of the preceding claims, **characterized in that**, when a person is located in a defined image section, the food processor is set up to inspect an image, extract a facial image and evaluate the viewing direction.

7. The food processor according to claim 6, **characterized in that** the user must additionally be located a distance of between 0.4 and 2 m away from the device.

8. The food processor according to one of claims 6 or 7, **characterized in that** a calculation algorithm is stored that also considers a viewing direction of at least one eye of the user outside of the acquisition range of the optical detection system, provided that the food processor lies within the resultant viewing field of the user.

9. The food processor according to one of claims 6 to 8, **characterized in that**, in addition to recognizing the viewing direction, an image can be continuously recorded for facial recognition using the camera provided in a control panel of the food processor.

10. The food processor according to claim 9, **characterized in that** the food processor and its functions can only be used upon acquisition of a valid direction of the head or pupil of an authorized user present in the acquisition range of the food processor, in which case recognizing the valid viewing direction of the eye also makes it possible to manually operate the food processor, i.e., operate it using individual actuators, e.g., speed, temperature and duration actuators, in addition to recognizing the face of an authorized user.

11. A method for operating a food processor, wherein voice signals of a user (13) are detected by a voice recognition system and compared with known control commands for operating the food processor (1), wherein the voice recognition system is activated as a function of an activation event, and the voice recognition system is activated as a function of optical signals detected by a detection system in the surrounding area of the food processor (1), **characterized in that** a recipe database is stored in the food processor, that the voice recognition is used to select complete recipes from the internal recipe database, provide a suitable recipe, i.e., one that can be allocated to a voice command, or a portion of a recipe is stored in the database, that parameters regarding the agitator speed, resistance heater temperature and duration are allocated to a recipe, and that, upon activation of the recipe sequence, the parameters are automatically set by the food processor or presented to the user for confirmation.

12. The method according to claim 11, **characterized by** the following procedural steps:
- Detecting at least one optical signal,
- Comparing the detected signal with predefined reference signals,
- Activating the voice recognition system if a detected signal corresponds to a predefined reference signal.

13. The method according to claim 11 or 12, **characterized in that** chronologically sequential signals are detected.

14. The method according to claim 12 or 13, **characterized in that** a predefined reference signal is a signal detected at an earlier time.

15. The method according to one of claims 11 to 14, **characterized in that** an alignment of the body of a user (13), in particular a head position or pupil position of the user (13), relative to the food processor (1) is detected.

## Revendications

1. Robot de cuisine électrique,
- avec un dispositif de reconnaissance vocale qui est conçu pour comparer des signaux vocaux d'un utilisateur (13) avec des instructions de commande connues pour faire fonctionner le robot de cuisine (1),
- avec un dispositif d'activation pour activer le dispositif de reconnaissance vocale, dans lequel le dispositif d'activation comporte un dispositif de détection optique et est configuré pour activer le dispositif de reconnaissance vocale en fonction d'informations détectées au moyen du dispositif de détection optique,
**caractérisé en ce que**,
- une base de données de recettes est stockée dans le robot de cuisine, le robot de cuisine étant en outre configuré de manière
- que des recettes complètes puissent être sélectionnées dans la base de données de recettes interne au moyen de la reconnaissance vocale, pour autant qu'une recette appropriée, à savoir une recette pouvant être affectée à une commande vocale, ou une partie d'une recette soit stockée dans la base de données,
- que des paramètres relatifs à la vitesse de rotation de l'agitateur, la température du chauffage par résistance et la durée soient associés à une recette, et
- que, avec l'activation du déroulement de la recette, les paramètres soient réglés automatiquement par le robot de cuisine ou soient présentés à l'utilisateur pour confirmation.

2. Robot de cuisine (1) selon la revendication 1, **caractérisé en ce que** le dispositif de détection optique comprend au moins un capteur optique (12) pour la détection de signaux optiques, lequel est agencé sur le robot de cuisine (1) de manière qu'il soit orienté sensiblement en direction d'un utilisateur (13).

3. Robot de cuisine (1) selon la revendication 1 ou 2, **caractérisé en ce que** le dispositif de détection optique comprend une unité d'évaluation qui est configurée pour comparer des signaux détectés successivement dans le temps par le capteur optique (12) les uns avec les autres.

4. Robot de cuisine (1) selon la revendication 2 ou 3, **caractérisé en ce que** les signaux comprennent une information sur une orientation du corps de l'utilisateur (13), en particulier une position de tête ou une position des pupilles de l'utilisateur (13), par rapport à l'appareil ménager (1).

5. Robot de cuisine (1) selon l'une des revendications précédentes, **caractérisé en ce que** le dispositif de détection optique comprend un capteur 3D (12).

6. Robot de cuisine électrique selon l'une des revendications précédentes, **caractérisé en ce que** le robot de cuisine est configuré pour, lorsqu'une personne est dans une partie d'image définie, analyser une image et extraire une représentation du visage et évaluer la direction de vision.

7. Robot de cuisine selon la revendication 6, **caractérisé en ce que** l'utilisateur doit en plus se trouver à une distance de l'appareil comprise entre 0,4 et 2m.

8. Robot de cuisine selon l'une des revendications 6 ou 7, **caractérisé en ce qu'**est stocké un algorithme de calcul qui prend également en compte une direction de vision d'au moins un oeil de l'utilisateur en dehors du champ de détection du dispositif de détection optique, pour autant que le robot de cuisine se trouve dans le champ de vision de l'utilisateur qui en résulte.

9. Robot de cuisine selon l'une des revendications 6 à 8, **caractérisé en ce que**, en plus de la reconnaissance de la direction de vision, une image pour la reconnaissance faciale peut être reçue en continu en utilisant la caméra prévue dans le panneau de commande du robot de cuisine.

10. Robot de cuisine selon la revendication 9, **caractérisé en ce que** le robot de cuisine peut être utilisé avec ses fonctions qu'en cas de détection d'une direction valide de la tête ou de la pupille d'un utilisateur autorisé s'attardant dans la zone de détection du robot de cuisine, auquel cas par la reconnaissance de la direction valide de vision de l'oeil, en plus de la reconnaissance du visage d'un utilisateur autorisé, la commande manuelle du robot de cuisine est également possible, c'est-à-dire la commande au moyen d'éléments de réglage individuels comme un élément de réglage de la vitesse de rotation, de la température et de la durée.

11. Procédé pour faire fonctionner un robot de cuisine, dans lequel des signaux vocaux d'un utilisateur (13) sont détectés au moyen d'un dispositif de reconnaissance vocale et sont comparés avec des instructions de commande connues pour faire fonctionner le robot de cuisine (1), dans lequel le dispositif de reconnaissance vocale est activé en fonction un événement d'activation, et le dispositif de reconnaissance vocale est activé en fonction de signaux optiques détectés au moyen d'un dispositif de détection dans la zone environnante du robot de cuisine (1), **caractérisé en ce qu'**une base de données de recettes est stockée dans le robot de cuisine, **en ce que** des recettes complètes sont sélectionnées dans la base de données interne au moyen de la reconnaissance vocale, pour autant qu'une recette appropriée, à savoir une recette pouvant être affectée à une commande vocale, ou une partie d'une recette soit stockée dans la base de données, **en ce que** des paramètres tels que la vitesse de rotation de l'agitateur, la température du chauffage par résistance et la durée sont associées à une recette, et **en ce que**, avec l'activation du déroulement de la recette, les paramètres sont réglés automatiquement par le robot de cuisine ou sont présentés à l'utilisateur pour confirmation.

12. Procédé selon la revendication 11, **caractérisé par** les étapes de procédé suivantes :
- détection d'au moins un signal optique,
- comparaison du signal détecté avec des signaux de référence prédéfinis,
- activation du dispositif de reconnaissance vocale si un signal détecté correspond à un signal de référence prédéfini.

13. Procédé selon la revendication 11 ou 12, **caractérisé en ce que** sont détectés des signaux se succédant dans le temps.

14. Procédé selon la revendication 12 ou 13, **caractérisé en ce qu'**un signal de référence prédéfini est un signal détecté plus tôt dans le temps.

15. Procédé selon l'une des revendications 11 à 14, **caractérisé en ce qu'**est détectée une orientation du corps d'un utilisateur (13), en particulier une position de tête ou une orientation des pupilles de l'utilisateur (13), par rapport au robot de cuisine (1).
